# FASCICULE DE BREVET EUROPEEN

(11) **EP 1 751 490 B1**
(45) Date de publication et mention de la délivrance du brevet: **08.09.2010**
(21) Numéro de dépôt: 05772964.2
(22) Date de dépôt: 20.05.2005
(51) Int. Cl.: G01B 7/28, G01B 21/20, B23Q 35/12

(54) **APPAREIL DE LECTURE DE CONTOUR COMPORTANT UN CAPTEUR D'EFFORT**
KONTURENLESEGERÄT MIT KRAFTSENSOR
CONTOUR READING APPLIANCE COMPRISING AN EFFORT SENSOR

(30) Priorité: 28.05.2004 FR 0405815
(43) Date de publication de la demande: 14.02.2007
(73) Titulaire: ESSILOR INTERNATIONAL (COMPAGNIE GENERALE D'OPTIQUE), 94220 Charenton-le-Pont (FR)
(72) Inventeur: HADDADI, Ahmed, F-91210 Draveil (FR)
(74) Mandataire: Lepelletier-Beaufond, François
(86) Numéro de dépôt international: PCT/FR2005/001270
(87) Numéro de publication internationale: WO 2006/000673

(56) Documents cités:
- DE-A1- 4 214 395
- US-A- 5 881 467
- US-B1- 6 473 977

## Description

L'invention concerne le domaine général des appareils de mesure dimensionnelle intervenant dans la fabrication d'une paire de lunettes adaptée à un porteur particulier.

L'invention concerne plus particulièrement un procédé de lecture de contour et un appareil de lecture de contour adapté, à l'aide d'un palpeur, à déterminer la forme d'un article disposé sur un support. L'article palpé est en général un cercle de monture de lunettes ou une lentille ophtalmique.

Un tel appareil est par exemple utilisé pour déterminer la forme du drageoir d'un cercle de monture, c'est-à-dire de la rainure qui parcourt l'intérieur du cercle de monture et qui permet le maintien d'une lentille ophtalmique dans ce cercle de monture. A cet effet, le palpeur est inséré dans le drageoir et suit le contour du drageoir tandis que l'appareil effectue un relevé des coordonnées du positionnement du palpeur le long de son trajet mémorisant ainsi une image numérique du contour du drageoir. Une lentille ophtalmique brute pourra ensuite être taillée selon les dimensions du drageoir pour pouvoir s'insérer parfaitement dans le cercle de monture.

On connaît du document US 5 121 550 un tel appareil de lecture de contour. L'appareil comporte un support pour le maintien d'un article à palper. Un plateau circulaire est monté tournant par rapport au support et porte un sous-ensemble de lecture qui comporte un palpeur. Le palpeur comporte une tige et une palette s'étendant à partir de ladite tige. L'extrémité distale de la palette est prévue pour se déplacer le long du contour.

Le sous-ensemble de lecture comporte une glissière sur laquelle est monté mobile un chariot rattaché au palpeur.

Cet appareil relève des coordonnées le long du trajet du palpeur en coordonnées polaires dont la dimension angulaire (θ) correspond à la rotation du plateau tournant et la dimension radiale (p) correspond au mouvement de translation du chariot sur la glissière.

La palette se déplace dans le fond du drageoir du cercle et reste en contact avec celui-ci sous l'effet d'un effort radial appliqué pour maintenir la palette contre le drageoir.

L'article à palper étant en trois dimensions, le palpeur doit pouvoir effectuer un mouvement selon un axe (z) correspondant à un mouvement transversal au plan comprenant les dimensions (ρ, θ).

Ces appareils comportent un moteur entraînant initialement le palpeur selon (z) jusqu'à être en regard du drageoir. Une fois la palette amenée, par translation le long de la glissière, en contact avec le drageoir, ledit moteur est débrayé ou passif de sorte que, durant la lecture du contour, le mouvement selon l'axe (z) est libre.

Lorsque l'article à lire est un cercle de monture présentant un galbe modéré, le mouvement selon l'axe (z) du palpeur est de faible amplitude, et la palette reste facilement en contact avec le fond du drageoir.

En revanche, dans le cas de cercles de monture à portions très galbées, où l'amplitude selon l'axe (z) est donc importante, le mouvement libre de la palette selon l'axe (z) permet plus difficilement à la palette de rester dans le fond du drageoir.

Pour limiter le risque d'écartement par rapport au fond du drageoir, il faut par exemple diminuer la vitesse de rotation lorsque la palette comporte une portion très galbée.

On connaît également du document US 6 473 977 un appareil et un procédé de lecture de contour dans lequel on effectue des mesures de déplacements pour positionner l'extrémité de la palette dans le fond du drageoir avant le commencement de la lecture du contour et pour appliquer à la palette un effort horizontal adapté lors de la lecture, ces deux étapes étant successives.

On connaît également du document US 6 325 700 un appareil de lecture de contour comportant des moyens de calculs prédictifs de l'amplitude selon les trois directions, et notamment selon l'axe (z), du contour à lire dans le but d'éviter que la palette ne s'écarte du fond du drageoir. Ces moyens de calculs estiment l'évolution selon l'axe (z) de la portion à parcourir en fonction particulièrement simple et commode à mettre en oeuvre. Un autre but de l'invention est de proposer un appareil de lecture adapté à tout type de contours convenant à la mise en oeuvre d'un tel procédé.

A cet effet, l'invention propose un procédé de lecture de contour, pour article tel qu'un cercle de monture de lunettes, dans lequel on utilise un appareil comportant un support pour le maintien dudit article, un plateau tournant monté à rotation par rapport au support autour d'un axe de rotation, ce plateau tournant portant un sous-ensemble de lecture qui comporte un palpeur présentant une palette et une tige s'étendant transversalement à ladite palette, ladite palette présentant une extrémité distale, ledit procédé comportant l'étape de déplacer ladite extrémité distale le long dudit contour et de relever des positions successives de ladite extrémité distale, **caractérisé en ce que** ladite étape de déplacer comporte, pendant que ladite extrémité distale est deplacée le long dudit contour l'étape de mesurer l'effort s'exerçant entre le plateau et la tige, parallèlement à celle-ci et l'étape de commander la distance entre ladite palette et ledit plateau en fonction dudit effort de sorte que l'intensité dudit effort reste inférieure à un seuil prédéterminé.

Ainsi, à chaque instant, la palette se situe à une distance du plateau tournant correspondant à un effort déterminé exercé par l'article à lire sur le palpeur ce qui permet de faire suivre à la palette un trajet prédéterminé et notamment d'éviter que la palette ne tombe du contour. De plus, on mesure l'effort selon une seule direction, ce qui simplifie la prise de mesure.

L'invention propose également un appareil de lecture de contour, pour article tel qu'un cercle de monture de lunettes, comportant un support pour le maintien dudit article, un plateau tournant monté à rotation par rapport au support autour d'un axe de rotation, ce plateau tournant portant un sous-ensemble de lecture qui comporte un palpeur présentant une palette et une tige s'étendant transversalement à ladite palette, ladite palette présentant une extrémité distale prévue pour se déplacer le long dudit contour, **caractérisé en ce que** ledit sous-ensemble comporte en outre un organe, sur lequel est fixée ladite tige, à l'opposé de ladite palette, s'étendant globalement transversalement à ladite tige, un moteur d'entraînement dudit organe pour commander la distance entre ladite palette et ledit plateau, un capteur d'effort disposé sur ledit organe pour déterminer l'effort auquel il est soumis suivant une direction parallèle à ladite tige et des moyens de commande reliés audit capteur et audit moteur, commandent ledit moteur pour que l'intensité dudit effort reste inférieure à un seuil prédéterminé, pendant que ladite extrémité distale est deplacée le long dudit contour.

La position de l'organe par rapport à la tige permet d'utiliser l'espace d'accueil relativement important disponible sous le plateau. De plus, le capteur d'effort étant à l'écart de la palette dans cet espace d'accueil, il est rendu inaccessible de l'extérieur de sorte qu'il est protégé d'un dérèglement involontaire par l'utilisateur ou encore de la poussière.

Selon une réalisation, lesdits moyens de commande sont propres à commander ledit moteur pour que l'intensité dudit effort reste inférieure à un premier seuil lorsque l'effort s'applique dans un premier sens et reste inférieure à un second seuil lorsque l'effort s'applique dans un second sens opposé au premier sens. Dans le cas où le palpeur lit un cercle de monture, la palette est alors à chaque instant très proche du fond du drageoir où l'effort est nul et la lecture peut se faire à vitesse rapide.

On notera qu'on connaissait déjà par le document US 5 341 079 une machine à copier comportant une tête de palpeur et une palette, où la tête de palpeur comporte un capteur d'effort pour déterminer l'effort appliqué par la gorge sur la palette. Ce capteur mesure les micro-déplacements de la palette selon trois directions, prenant pour référence la tête de palpeur, ces micro-déplacements correspondent aux efforts appliqués sur la palette par la gorge.

Le document 5 477 119 décrit un dispositif de suivi de gorge comportant une telle tête de palpeur où, en fonction de l'effort capté, les moyens d'entraînement de la tête du palpeur sont commandés pour rendre nul l'effort selon une direction transversale à la palette et à rendre la résultante de l'effort selon l'axe principal de la palette égale à une valeur prédéterminée. La palette reste alors centrée dans la gorge et en contact avec le fond. Le dispositif est par ailleurs pourvu d'un capteur de position permettant de capter la position, selon les trois directions, du palpeur le long du contour La position est relevée avec pour référence le support fixe de l'appareil.

Outre le positionnement du capteur d'effort à l'extrémité distale, où il est particulièrement exposé tandis qu'il doit présenter un volume réduit, ce capteur relève les efforts dans les trois directions et ajuste la position de la tête de palpeur dans ces trois directions ce qui est relativement complexe (l'appareil selon l'invention est capable de procurer le même résultat avec une seule direction).

Selon d'autres caractéristiques de mise en oeuvre particulièrement simples et commodes tant à la fabrication qu'à l'utilisation :
- ledit organe est un premier organe porteur, le sous-ensemble comportant en outre un deuxième organe porteur saillant transversalement par rapport audit plateau et sur lequel le premier organe porteur est monté à translation suivant une direction parallèle à l'axe de rotation ; et éventuellement
- le plateau tournant comporte une lumière au travers de laquelle s'étend ladite tige, ladite palette étant située d'un premier côté dudit plateau tandis que ledit deuxième organe porteur, ledit premier organe porteur et une extrémité proximale de ladite tige opposée à ladite palette sont situés d'un second côté dudit plateau ; et/ou
- le deuxième organe porteur comporte un arbre porteur ; et/ou
- le premier organe porteur est un bras porteur comportant une plaquette présentant deux extrémités à partir desquelles s'étendent transversalement deux lames parallèles, chaque lame étant déformable parallèlement audit axe de rotation, et un manchon s'étendant entre deux extrémités des lames opposées à la plaquette, ledit manchon étant adapté à enserrer ladite extrémité proximale de ladite tige ; et éventuellement
- chaque lame présente à l'une de ses extrémités, opposée à la plaquette, une ouverture circulaire adaptée à accueillir ladite tige enserrée dans ledit manchon ; et/ou
- ledit deuxième organe porteur comporte un arbre porteur et ledit bras porteur comporte une bague centrée sur ledit arbre porteur par l'intermédiaire d'une douille à billes permettant ladite translation de ladite bague par rapport audit arbre porteur ; et éventuellement
- ledit moteur d'entraînement comporte un pignon engrenant sur une crémaillère solidaire de ladite bague ; et/ou
- ledit moteur d'entraînement comporte un codeur pour repérer la position du premier organe porteur par rapport au deuxième organe porteur ; et/ou
- ledit premier organe est en outre monté tournant autour dudit deuxième organe ; et/ou
- ledit capteur d'effort comporte une cellule de détection et un drapeau montés en vis-à-vis ; et éventuellement
- ladite cellule de détection est une cellule optoélectronique ; et/ou
- ledit premier organe porteur est un bras porteur comportant une plaquette présentant deux extrémités à partir desquelles s'étendent transversalement deux lames parallèles, ladite cellule de détection et ledit drapeau étant situés entre les deux lames ; et éventuellement
- la cellule de détection et le drapeau sont montés fixement respectivement sur la plaquette et sur un manchon s'étendant entre deux extrémités des lames opposées à la plaquette, le sous-ensemble comportant une unité de traitement de signaux reliée audit moteur d'entraînement, la cellule comportant des moyens de détection du positionnement du drapeau par rapport à elle-même et des moyens d'envoi d'un signal à ladite unité de traitement en fonction dudit positionnement.
- ledit palpeur est mobile tant parallèlement audit axe de rotation que transversalement audit axe de rotation ;

Les caractéristiques et avantages de l'invention ressortiront de la description qui suit, donnée à titre d'exemple préféré, en référence aux dessins annexés, sur lesquels :
- la figure 1 est une vue en perspective d'un appareil de lecture de contour selon l'invention ;
- la figure 2 est similaire à la figure 1, l'appareil de lecture de contour recevant une monture de lunettes dont la forme des cercles est destinée à être relevée par le palpeur ;
- la figure 3 est une vue en perspective du dessous du plateau tournant permettant de voir le sous-ensemble de lecture porté par le plateau tournant ;
- la figure 4 est une vue en perspective d'une partie du sous-ensemble de lecture comportant le palpeur, le bras porteur et le capteur d'effort ;
- la figure 5 est une vue schématique de la tige et des lames du bras porteur, dans une situation où un effort est appliqué sur le palpeur ;
- les figures 6a à 6c sont des représentations schématiques de trois configurations de l'orientation des efforts intervenant sur le palpeur, la palette et la gorge en fonction de la position de la palette dans la gorge ; et
- la figure 7 est un schéma de principe de l'asservissement de la position du palpeur.

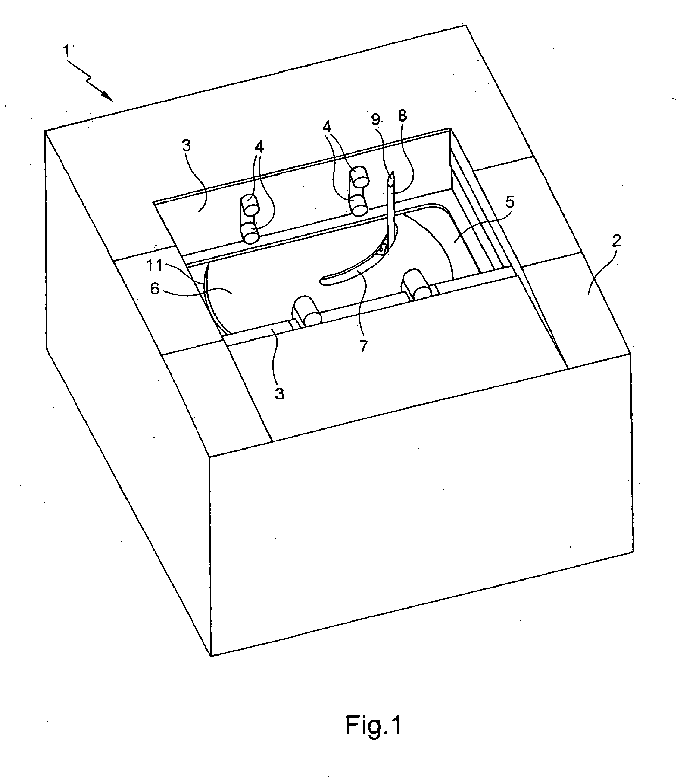

La figure 1 est une vue générale d'un appareil de lecture de contour 1 tel qu'il se présente à son utilisateur. Cet appareil 1 comporte un capot supérieur 2 recouvrant l'ensemble de l'appareil à l'exception d'une portion supérieure centrale.

Un plateau tournant 6 est monté tournant par rapport au châssis 5 de l'appareil 1. Ce plateau tournant 6 comporte une lumière 7 oblongue en forme d'arc de cercle à travers laquelle saille un palpeur 8 comportant une tige 12 munie à son extrémité distale d'une palette 9.

L'appareil 1 de la figure 1 est destiné à recevoir une monture 10.

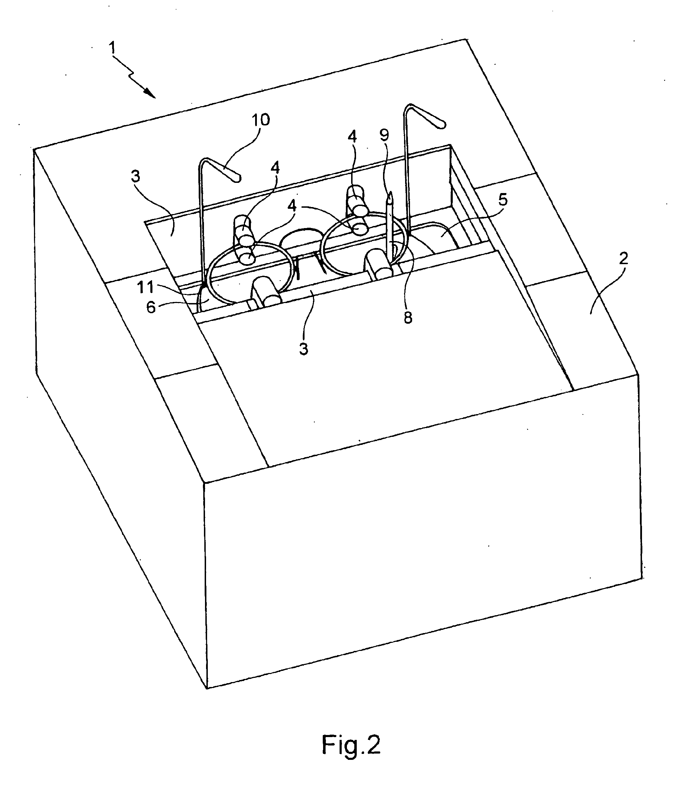

Comme on le voit sur la figure 2, l'appareil 1 comporte un dispositif de serrage de la monture 10 présentant deux mâchoires 3 parallèles et quatre pinces. Chaque pince comporte deux plots 4 et est située sur une mâchoire 3 face à une pince de l'autre mâchoire 3.

Au moins l'une des mâchoires 3 est apte à se rapprocher ou à s'écarter de l'autre pour enserrer la monture 10. En position enserrée de la monture 10, les pinces se situent en face à face sur chaque cercle, selon une direction qui correspond à une direction verticale lorsque la monture est portée et horizontale lorsque la monture est placée dans l'appareil 1. Les plots 4 d'une même pince peuvent se rapprocher l'un de l'autre pour pincer les cercles et maintenir la monture 10 pour la lecture.

Sur cette figure 2, les mâchoires 3 ont été rapprochées pour maintenir horizontalement la monture 10. Les plots 4 ont été refermés sur les cercles de monture. Chacun des cercles de la monture 10 est ainsi prêt à être palpé selon un trajet démarrant par l'insertion du palpeur à un emplacement prédéterminé situé entre deux plots 4 puis le long du drageoir de la monture 10 pour couvrir toute la circonférence du cercle de monture.

Notons que la machine 1 est dans cet exemple équipée de mâchoires adaptées au maintien d'une monture mais que tout autre dispositif de serrage peut être employé, comme par exemple une pince de maintien d'une lentille ophtalmique dont le contour externe doit être relevé.

Le châssis 5 se présente alors comme une table de support dans laquelle une découpe circulaire 11 de diamètre légèrement supérieur au diamètre du plateau tournant 6 a été pratiquée. La découpe circulaire 11 reçoit le plateau tournant 6 qui est guidé par trois galets de guidage (non visibles) disposés régulièrement le long de sa périphérie.

Alternativement les galets sont commandés par un moteur-codeur (non représenté) permettant une rotation pilotée du plateau tournant 6 et un relevé de sa position angulaire à tout instant.

La lumière 7 en arc de cercle a une longueur correspondant approximativement au rayon du plateau tournant 6 et s'étend entre le centre du plateau tournant 6 et sa périphérie.

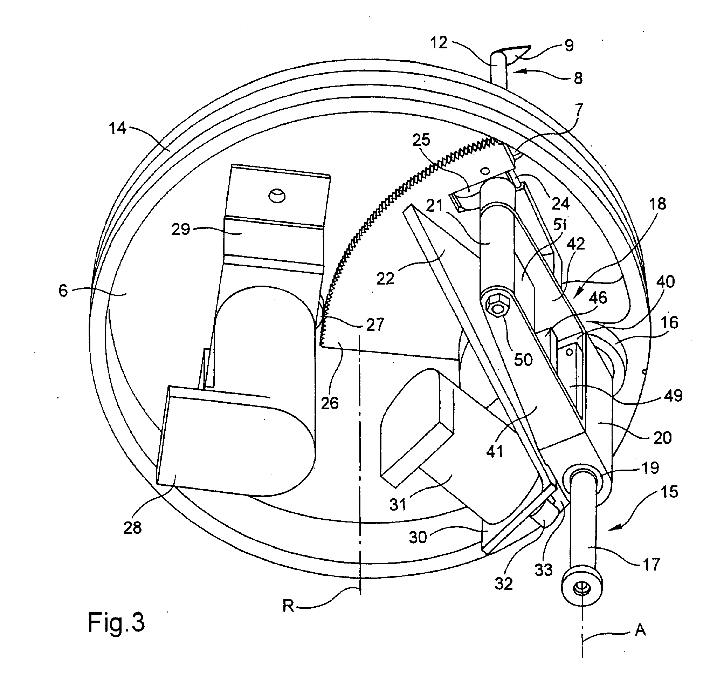

La lumière 7 est de plus centrée autour d'un axe A (figure 3).

Comme on le voit sur la figure 3, une rainure 14 est disposée sur la tranche du plateau tournant 6, sur toute sa circonférence. Cette rainure 14 permet le maintien et l'entraînement du plateau 6 par rapport au châssis 5, grâce aux galets motorisés.

Le plateau tournant 6 porte un sous-ensemble de lecture 15, comportant un palier 16 sur lequel est monté un arbre porteur 17 fixé sur le plateau tournant 6 grâce à rivet (non visible). Cet arbre 17 est centré sur l'axe A.

Un bras porteur 18 est monté sur l'arbre porteur 17 par l'intermédiaire d'une douille à billes 19. Le bras porteur 18 comporte à l'une de ses extrémités une bague 20 entourant la douille à billes 19 et l'arbre porteur 17, la douille à billes 19 permettant au bras porteur 18 un mouvement de rotation autour de l'axe A ainsi qu'un mouvement de translation le long de cet axe.

A son extrémité opposée à la bague 20, le bras porteur 18 comporte un manchon cylindrique 21 dans lequel est enserrée la tige 12 de manière que celle-ci soit parallèle à l'arbre porteur 17.

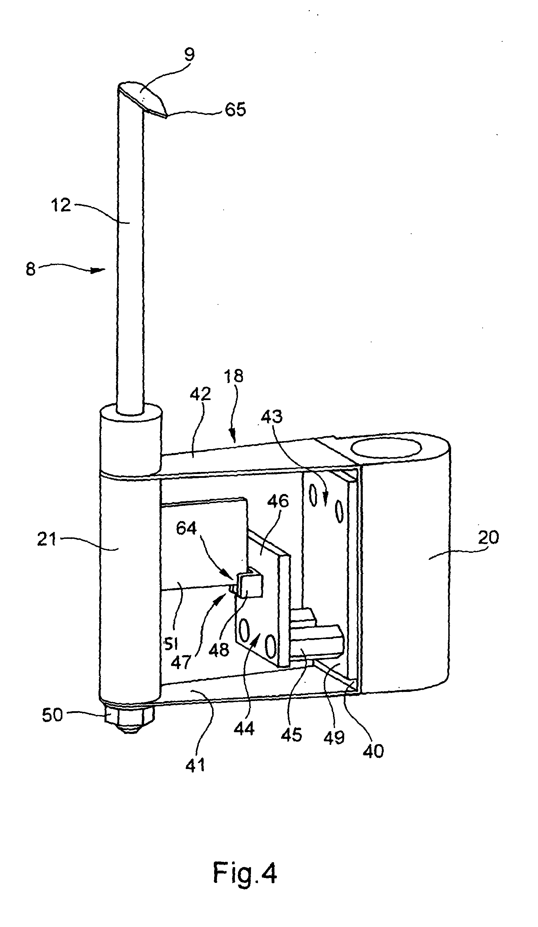

En référence à la figure 4, on décrit maintenant le bras porteur 18.

Le bras porteur 18 est une pièce globalement carrée. Aux deux extrémités d'une plaquette 40 sensiblement rectangulaire s'étendent transversalement deux lames 41, 42 identiques.

Chaque lame 41, 42 est ici triangulaire et présente une extrémité arrondie, opposée à la plaquette 40. A cette extrémité, chaque lame 41, 42 présente une ouverture circulaire (non représentée) destinée à accueillir le manchon 21 enserrant la tige 12.

La plaquette 40 porte une plaque de renforcement 49 fixée à la plaquette 40 par deux paires 43, 44 de vis. Les paires 43, 44 de vis fixent également la plaquette 40 à la bague 20. Une première paire 43 comporte deux vis affleurant la surface de la plaquette 40.

La deuxième paire 44 comporte des vis plus longues qui s'étendent chacune transversalement à la plaquette 40 à travers une gaine 45 de façon à fixer parallèlement à la plaquette 40 un support de cellule 46 sur sa surface opposée à la plaquette 40. Le support 46 porte une cellule optoélectronique 47 comportant deux parois 48 parallèles entre elles et transversales aux lames 41, 42 et à la plaquette 40. Cette cellule 47 est adaptée à capter le positionnement d'un drapeau 51 entre ses deux parois 48 par la mesure d'un flux lumineux. L'une des parois 48 comporte un émetteur optique et l'autre paroi comporte un récepteur optique, le récepteur produisant un signal de sortie ayant une valeur qui varie en fonction de la quantité de lumière reçue de l'émetteur. Les lames 41, 42, la cellule 47 et le drapeau 51 forment un capteur d'effort 64. Le signal électrique est transmis par des moyens d'envoi (non visibles) de signal de la cellule 47 à un moteur-codeur 31 décrit plus loin. Les moyens d'envoi peuvent être un émetteur radio, un fil de connexion, etc.

Le palpeur 8 comporte la tige de palpeur 12 portant en son extrémité distale opposée au bras 18 la palette 9. La tige 12 est centrée et fixée par rapport aux deux ouvertures par le manchon 21 qui l'enrobe entre les deux ouvertures et qui s'étend légèrement en direction de la palette 9. La tige 12 est fixée à son extrémité proximale, opposée à la palette 9, à l'ouverture de la lame 41 correspondante par un écrou et une vis 50.

Le manchon 21 porte entre les deux lames 41, 42 le drapeau 51 qui s'étend de façon à ce que l'un de ses coins vienne occuper une partie de l'espace entre les deux parois 48.

Par leur forme, chaque lame 41, 42 présente une rigidité d'ensemble. Toutefois, chaque lame 41, 42 présente une légère souplesse pour pouvoir se courber dans une direction parallèle à la tige 12.

La présence des deux lames 41, 42 maintenant le palpeur 8 permet d'obtenir une souplesse transversale du bras porteur 18. De plus, le maintien du palpeur 8 au niveau des deux ouvertures permet d'éviter le pivotement du palpeur 8 qui pourrait se produire si celui-ci était embarqué sur une seule lame.

Ainsi le capteur d'effort 64 est positionné dans une zone de l'appareil 1 présentant un espace d'accueil relativement important. Lorsque l'appareil 1 est prêt à l'emploi, le capteur d'effort 64 n'est pas accessible de l'extérieur de sorte qu'il est protégé de la poussière mais également d'une intervention, notamment involontaire, de l'utilisateur de l'appareil 1, ce qui évite tout dérèglement du capteur 64.

Le fait que le bras porteur 18 soit monté tournant autour de l'axe A permet au palpeur 8 un mouvement en arc de cercle le long de la lumière 7, dans un plan transversal à l'axe de rotation (R) du plateau tournant 6, cet axe de rotation (R) étant ici parallèle à l'axe A. De plus, le palpeur 8 peut effectuer un mouvement d'entrée/sortie de la palette 9 par rapport à la surface du plateau tournant 6, lorsque le bras porteur 18 coulisse le long de l'axe A. Lorsque l'appareil est en fonctionnement, seule la palette 9 et une partie de la tige 12 sont sorties, le reste du sous-ensemble 15 étant situé de l'autre côté du plateau.

Le sous-ensemble de lecture 15 comporte également un bras de guidage 22 rattaché à la base de l'arbre 17 par l'intermédiaire d'un roulement (non visible) n'autorisant au bras de guidage 22 qu'un mouvement de rotation autour de l'axe A. Ce bras de guidage 22 a une longueur suffisante pour atteindre la lumière 7 et comporte, en vis-à-vis de cette lumière 7, un appui fixe 24 et un roulement 25.

L'appui fixe 24 et le roulement 25 sont disposés côte à côte avec un écartement mutuel correspondant sensiblement à l'épaisseur de la tige 12.

De par le montage à rotation du bras de guidage 22 sur l'arbre porteur 17, l'appui fixe 24 et le roulement 25 restent en vis-à-vis de la lumière 7 quelle que soit la position angulaire du bras de guidage 22 autour de l'axe A. Le bras porteur 18 et le bras de guidage 22 sont disposés de telle sorte que la tige 12 est enserrée entre l'appui fixe 24 et le roulement 25. Les mouvements angulaires du bras porteur 18 et du bras de guidage 22 autour de l'axe A se font ainsi conjointement.

Le bras de guidage 22 comporte de plus une portion semi-circulaire dentée 26 en forme d'arc centrée sur l'axe A. Les dents de la portion 26 engrènent avec un pignon intermédiaire 27 qui engrène lui-même avec le pignon (non visible) d'un moteur-codeur 28 monté sur une chape 29 qui est fixée sur le plateau tournant 6. Les dents du pignon intermédiaire 27 n'ont pas été représentées pour rendre les dessins plus clairs.

Le bras de guidage 22 comporte de plus une chape verticale 30, disposée parallèlement à l'axe A, sur laquelle est fixé un moteur-codeur 31 dont le pignon 32 engrène avec une crémaillère 33 fixée sur la bague 20 du bras porteur 18. La crémaillère 33 est disposée parallèlement à l'axe A. Les dents du pignon 32 n'ont pas été représentées pour les mêmes raisons de clarté que précédemment.

Le moteur-codeur 31 comporte des moyens de commande (non visibles) adaptés à recevoir un signal électrique et à commander ou non en fonction de ce signal un mouvement du pignon 32.

Les codeurs des moteurs-codeurs 28, 31 permettent de relever la position du palpeur 8 selon les directions radiale et verticale.

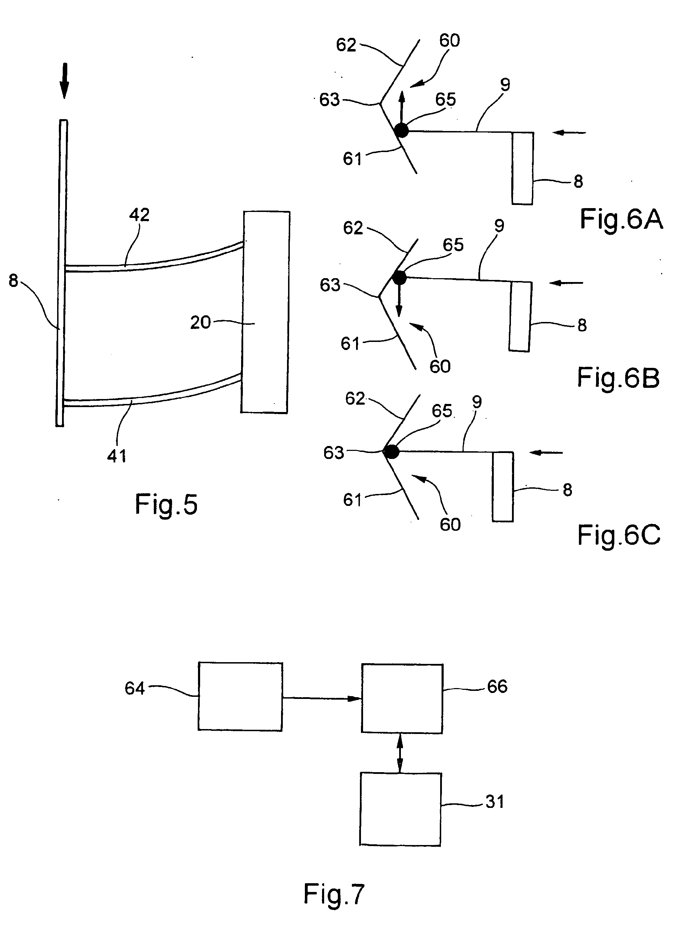

Comme on le voit sur les figures 5 et 6a à 6c, lors de la lecture, le palpeur 8 est susceptible d'exercer sur le contour une pression de contact. Cette pression résulte d'un effort radial appliqué au moyen du moteur-codeur 28.

Le contour à lire est ici un drageoir 60 d'un cercle de monture. Le drageoir 60 à la forme d'une gorge à deux branches 61, 62 en V. La palette de palpeur est mobile dans le drageoir sur les deux branches 61, 62. On appelle fond 63 du drageoir 60, la jonction des branches 61, 62.

On appelle direction selon z la direction parallèle à l'axe A, et à la tige 12 de palpeur, et direction selon ρ, la direction du rayon de courbure du drageoir 60.

La pression de contact s'applique selon ρ, ce qui génère un effort selon z appliqué par le drageoir 60 sur l'embout 65 que comporte la palette 9. Lorsque l'embout 65 est au contact de la branche 61, l'effort selon z est dirigé, selon un premier sens, vers la branche 62 Lorsque l'embout 65 est au contact de la branche 62, l'effort selon z est dirigé, selon un second sens, vers la branche 61. Lorsque l'embout est contre le fond 63 du drageoir 60, la résultante selon z de l'effort appliqué sur le drageoir est nulle.

On voit sur la figure 5 l'état des lames 41, 42 lorsque l'embout 65 est situé contre la branche 62. L'effort selon z appliqué sur l'embout 65 est transmis au reste du palpeur 8, ce qui se traduit par une déformation des lames 41, 42 solidaires du palpeur 8.

Le drapeau 51 solidaire du palpeur 8 effectue un micro-déplacement résultant de la déformation des lames 41, 42 devant la cellule 47 immobile. Un changement de flux lumineux est détecté par la cellule 47.

Comme montré sur la figure 7, le capteur 64 est relié par un câble à une unité de traitement 66 adaptée à recevoir un signal électrique émis par le capteur 64 et correspondant au flux lumineux. L'unité de traitement 66 est elle-même reliée par un câble au moteur 31. La liaison électrique entre l'unité de traitement 66 et le moteur 31 est une liaison bi-directionnelle.

L'unité de traitement 66 traite le signal reçu du capteur 64 en le comparant à une consigne prédéterminée, correspondant ici à une valeur d'effort nulle, puis envoie au moteur 31 un signal de sortie correspondant. D'autre part, le moteur 31 envoie à l'unité de traitement 66 un signal correspondant à la position, selon l'axe (z), du palpeur 8.

Concrètement, la détection d'un micro-déplacement du drapeau 51 par rapport à une position de référence entraîne l'envoi, par la cellule 47 du capteur 64 vers l'unité de traitement 66, d'un signal correspondant au micro-déplacement et notamment son orientation. L'unité de traitement 66 effectue une comparaison avec une consigne prédéterminée dans l'unité de traitement 66. Tant que la valeur est supérieure à la consigne, l'unité de traitement 66 commande au moteur 31 l'activation du pignon 32.

Le pignon 32 engrène alors avec la crémaillère 33 dans le sens inverse du micro-déplacement du palpeur 8 c'est-à-dire dans le sens de diminution de l'effort suivant l'axe (z) sur la palette 9.

De façon plus générale, la lecture d'un contour peut démarrer par la mise en position de la palette 9 de palpeur contre le contour, en la disposant à la hauteur voulue grâce au moteur 31 et en maintenant le contact entre la palette 9 et le contour grâce au moteur 28 qui est piloté pour que le palpeur 8 exerce une pression de contact constante contre le contour. On notera ici que le maintien de la palette 9 dans le fond 63 du drageoir 60 permet de diminuer la valeur de l'effort radial appliqué en comparaison de l'effort radial appliqué dans les appareils connus. On notera également que dans la direction radiale on se contente de maintenir la pression constante.

Les galets sont ensuite commandés pour que le plateau tournant 6 effectue un tour complet correspondant au tour complet du contour à palper.

Et, la vitesse de rotation du plateau tournant 6 peut être relativement rapide.

Pendant cette rotation, le capteur 64 mesure l'effort s'exerçant sur le bras 18 et correspondant à l'effort appliqué par l'article à la palette 9. En fonction de l'effort, le moteur 31 commande la distance entre la palette 9 et le plateau 6 en entraînant le palpeur 8.

Plus précisément, le moteur-codeur 31 suit la consigne en provenance de l'unité de traitement 66. Si l'effort correspond à la consigne le moteur n'agit qu'en tant que codeur pour repérer les positions successives du bras porteur 18 le long de l'axe A (correspondant à la hauteur de la palette 9 par rapport au plateau 6) pendant que la palette 9 suit la forme dans laquelle elle est engagée.

Selon une variante, on définit une valeur seuil d'effort capté par la cellule 47, non nulle, en dessous de laquelle on considère que l'embout 65 est suffisamment proche du fond 63 du drageoir 60 même si l'embout 65 n'est pas exactement au fond du drageoir.

Selon une autre variante, on définit deux valeurs seuil d'effort capté distinctes. Lorsque la palette est au contact de la branche 62, c'est-à-dire lorsque l'effort est dirigé vers la branche 61, la valeur seuil d'effort à ne pas dépasser est une première des deux valeurs précédentes. Lorsque la palette est au contact de la branche 61, c'est a deuxième valeur seuil qui est prise en compte.

Selon un mode de réalisation non représenté, et moyennant les adaptations nécessaires, l'invention s'applique également à la lecture d'une lentille : si la lentille comporte une rainure, la palette est alors identique à celle précédemment décrite pour un cercle de monture. Si la lentille présente un profil convexe, le dos du palpeur présente alors un creux. Le creux reçoit également des efforts selon la direction z qui sont captés par un capteur d'effort tel que précédemment décrit.

Selon des modes de réalisation non représentés, le capteur d'effort est une jauge de contraintes ou encore une cale piézo-électrique.

On a décrit un mode de réalisation de l'appareil selon l'invention, toutefois, l'invention s'applique également à des appareils présentant des variantes de réalisation par rapport à la cinématique du palpeur, les adaptations nécessaires des éléments permettant les différents mouvements étant effectuées.

## Revendications

1. Procédé de lecture de contour, pour article tel qu'un cercle de monture de lunettes, dans lequel on utilise un appareil comportant un support (3, 4) pour le maintien dudit article, un plateau tournant (6) monté à rotation par rapport au support (3, 4) autour d'un axe de rotation (R), ce plateau tournant (6) portant un sous-ensemble de lecture (15) qui comporte un palpeur (8) présentant une palette (9) et une tige (12) s'étendant transversalement à ladite palette, ladite palette (9) présentant une extrémité distale, ledit procédé comportant l'étape de déplacer ladite extrémité distale le long dudit contour et de relever des positions successives de ladite extrémité distale, **caractérisé en ce que** ladite étape de déplacer comporte pendant que ladite extrémité distale est déplacée le long dudit contour, l'étape de mesurer l'effort s'exerçant entre le plateau (6) et la tige (12), parallèlement à celle-ci et l'étape de commander la distance entre ladite palette (9) et ledit plateau (6) en fonction dudit effort de sorte que l'intensité dudit effort reste inférieure à un seuil prédéterminé.

2. Appareil de lecture de contour (1), pour article tel qu'un cercle de monture de lunettes (10), convenant à la mise en oeuvre du procédé selon la revendication 1, comportant un support (3, 4) pour le maintien dudit article, un plateau tournant (6) monté à rotation par rapport au support (3, 4) autour d'un axe de rotation (R), ce plateau tournant (6) portant un sous-ensemble de lecture (15) qui comporte un palpeur (8) présentant une palette (9) et une tige (12) s'étendant transversalement à ladite palette, ladite palette (9) présentant une extrémité distale prévue pour se déplacer le long dudit contour, ledit sous-ensemble (15) comportant en outre un organe (18), sur lequel est fixée ladite tige (12), à l'opposé de ladite palette, s'étendant globalement transversalement à ladite tige (12), un moteur d'entraînement (31) dudit organe (18) pour commander la distance entre ladite palette (9) et ledit plateau (6), **caractérisé en ce que** ledit sous-ensemble (15) comporte en outre un capteur d'effort (64) disposé sur ledit organe (18) pour déterminer l'effort auquel il est soumis suivant une direction parallèle à ladite tige (12) et des moyens de commande reliés audit capteur (64) et audit moteur (31), commandent ledit moteur (31) pour que l'intensité dudit effort reste inférieure à un seuil prédéterminé, pendant que ladite extrémité distale est deplacée le long dudit contour

3. Appareil selon la revendication 2, **caractérisé en ce que** lesdits moyens de commande commandent ledit moteur (31) pour que l'intensité dudit effort reste inférieure à un premier seuil lorsque l'effort s'applique dans un premier sens et reste inférieure à un second seuil lorsque l'effort s'applique dans un second sens opposé au premier sens.

4. Appareil selon l'une des revendications 2 ou 3, **caractérisé en ce que** ledit organe est un premier organe porteur (18), le sous-ensemble (15) comportant en outre un deuxième organe porteur (17) saillant transversalement par rapport audit plateau (6) et sur lequel le premier organe porteur (18) est monté à translation suivant une direction parallèle à l'axe de rotation (R).

5. Appareil selon la revendication 4, **caractérisé en ce que** le plateau tournant (6) comporte une lumière (7) au travers de laquelle s'étend ladite tige (12), ladite palette (9) étant située d'un premier côté dudit plateau tandis que ledit deuxième organe porteur (17), ledit premier organe porteur (18) et une extrémité proximale de ladite tige (12) opposée à ladite palette sont situés d'un second côté dudit plateau (6).

6. Appareil selon l'une des revendications 4 ou 5, **caractérisé en ce que** le deuxième organe porteur comporte un arbre porteur (17).

7. Appareil selon l'une des revendications 4 à 6, **caractérisé en ce que** le premier organe porteur est un bras porteur (18) comportant une plaquette (40) présentant deux extrémités à partir desquelles s'étendent transversalement deux lames parallèles (41, 42), chaque lame (41, 42) étant déformable parallèlement audit axe de rotation (R), et un manchon (21) s'étendant entre deux extrémités des lames opposées à la plaquette (40), ledit manchon (21) étant adapté à enserrer ladite extrémité proximale de ladite tige (12).

8. Appareil selon la revendication 7, **caractérisé en ce que** chaque lame (41, 42) présente à l'une de ses extrémités, opposée à la plaquette (40), une ouverture circulaire adaptée à accueillir ladite tige (12) enserrée dans ledit manchon (21).

9. Appareil selon l'une des revendications 7 ou 8, **caractérisé en ce que** ledit deuxième organe porteur comporte un arbre porteur (17) et ledit bras porteur (18) comporte une bague (20) centrée sur ledit arbre porteur par l'intermédiaire d'une douille à billes (19) permettant ladite translation de ladite bague (20) par rapport audit arbre porteur (17).

10. Appareil selon la revendication 9, **caractérisé en ce que** ledit moteur d'entraînement (31) comporte un pignon (32) engrenant sur une crémaillère (33) solidaire de ladite bague (20).

11. Appareil selon l'une des revendications 4 à 10, **caractérisé en ce que** ledit moteur d'entraînement (31) comporte un codeur pour repérer la position du premier organe porteur (18) par rapport au deuxième organe porteur (17).

12. Appareil selon l'une des revendications 4 à 11, **caractérisé en ce que** ledit premier organe (18) est en outre monté tournant autour dudit deuxième organe (17).

13. Appareil selon l'une des revendications 2 à 12, **caractérisé en ce que** ledit capteur d'effort (64) comporte une cellule de détection (47) et un drapeau (51) montés en vis-à-vis.

14. Appareil selon la revendication 13, **caractérisé en ce que** ladite cellule de détection (47) est une cellule optoélectronique.

15. Appareil selon l'une quelconque des revendications 13 ou 14, **caractérisé en ce que** ledit premier organe porteur est un bras porteur (18) comportant une plaquette (40) présentant deux extrémités à partir desquelles s'étendent transversalement deux lames parallèles (41, 42), ladite cellule de détection (47) et ledit drapeau (51) étant situés entre les deux lames (41, 42).

16. Appareil selon la revendication 15, **caractérisé en ce que** la cellule de détection (47) et le drapeau (51) sont montés fixement respectivement sur la plaquette (40) et sur un manchon (21) s'étendant entre deux extrémités des lames (41, 42) opposées à la plaquette, le sous-ensemble (15) comportant une unité de traitement (66) de signaux reliée audit moteur d'entraînement (31), la cellule (47) comportant des moyens de détection du positionnement du drapeau (51) par rapport à elle-même et des moyens d'envoi d'un signal à ladite unité de traitement (66) en fonction dudit positionnement.

17. Appareil selon l'une quelconque des revendications précédentes, **caractérisé en ce que** ledit palpeur (8) est mobile tant parallèlement audit axe de rotation (R) que transversalement audit axe de rotation (R).

## Claims

1. Contour reading method, for article such as an eyeglass frame rim, wherein a device is used including a support (3, 4) for holding said article, a rotary platform (6) mounted to rotate relative to the support (3, 4) about a rotation axis (R), this rotary platform (6) carrying a reading subassembly (15) which includes a feeler (8) featuring a finger (9) and a rod (12) extending transversely to said finger, said finger (9) having a distal end, said method including the step of displacing said distal end along said contour and of measuring successive positions of said distal end, **characterised in that** said displacement step includes, while said distal end is displaced along said contour, the step of measuring the force exerted between the platform (6) and the rod (12), parallel to the latter, and the step of controlling the distance between said finger (9) and said platform (6) as a function of said force so that the intensity of said force remains below a predetermined threshold.

2. Contour reading device (1), for articles such as an eyeglass frame rim (10), suitable for the implementation of the method according to claim 1, including a support (3, 4) for holding said article, a rotary platform (6) mounted to rotate relative to the support (3, 4) about a rotation axis (R), this rotary platform (6) carrying a reading subassembly (15) which includes a feeler (8) featuring a finger (9) and a rod (12) extending transversely to said finger, said finger (9) having a distal end adapted to be displaced along said contour, said subassembly (15) further including a member (18), to which said rod (12) is fixed, opposite said finger, extending globally transversely to said rod (12), a drive motor (31) of said member (18) for controlling the distance between said finger (9) and said platform (6), **characterized in that** said subassembly (15) further includes a force sensor (64) disposed on said member (18) to determine the force to which it is subjected in a direction parallel to said rod (12), and control means connected to said sensor (64) and to said motor (31) control said motor (31) so that the intensity of said force remains below a predetermined threshold, while said distal end is displaced along said contour.

3. Device according to claim 2, **characterised in that** said control means control said motor (31) so that the intensity of said force remains below a first threshold if the force is applied in a first sense and remains below a second threshold if the force is applied in a second sense opposite the first sense.

4. Device according to either of claims 2 or 3, **characterised in that** said member is a first support member (18), the subassembly (15) further including a second support member (17) projecting transversely relative to said platform (6) and on which the first support member (18) is mounted in translation in a direction parallel to the rotation axis (R).

5. Device according to claim 4, **characterised in that** the rotary platform (6) includes an opening (7) through which said rod (12) extends, said finger (9) being situated on a first side of said platform whereas said second support member (17), said first support member (18) and a proximal end of said rod (12) opposite said finger are situated on a second side of said platform (6).

6. Device according to either of claims 4 or 5, **characterised in that** the second support member includes a support shaft (17).

7. Device according to any one of claims 4 to 6, **characterised in that** the first support member is a support arm (18) including a plate (40) having two ends from which two parallel blades (41, 42) extend transversely, each blade (41, 42) being deformable parallel to said rotation axis (R), and a sleeve (21) extending between two ends of the blades opposite the plate (40), said sleeve (21) being adapted to grip said proximal end of said rod (12).

8. Device according to claim 7, **characterised in that** each blade (41, 42) has at one of its ends, opposite the plate (40), a circular opening adapted to receive said rod (12) gripped in said sleeve (21).

9. Device according to either of claims 7 or 8, **characterised in that** said second support member includes a support shaft (17) and said support arm (18) includes a ring (20) centered on said support shaft via a ball bush (19) enabling said translation of said ring (20) relative to said support shaft (17).

10. Device according to claim 9, **characterised in that** said drive motor (31) includes a pinion (32) meshing with a rack (33) fastened to said ring (20).

11. Device according to any one of claims 4 to 10, **characterised in that** said drive motor (31) includes a coder for measuring the position of the first support member (18) relative to the second support member (17).

12. Device according to any one of claims 4 to 11, **characterised in that** said first member (18) is further mounted to turn about said second member (17).

13. Device according to any one of claims 2 to 12, **characterised in that** said force sensor (64) includes a detection cell (47) and a flag (51) mounted face to face.

14. Device according to claim 13, **characterised in that** said detection cell (47) is an optoelectronic cell.

15. Device according to either of claims 13 or 14, **characterised in that** said first support member is a support arm (18) including a plate (40) having two ends from which two parallel blades (41, 42) extend transversely, said detection cell (47) and said flag (51) being situated between the two blades (41, 42).

16. Device according to claim 15, **characterised in that** the detection cell (47) and the flag (51) are fixedly mounted on the plate (40) and on a sleeve (21) extending between two ends of the blades (41, 42) opposite the plate, respectively, the subassembly (15) including a signal processing unit (66) connected to said drive motor (31), the cell (47) including means for detecting the position of the flag (51) relative to itself and means for sending a signal to said processing unit (66) as a function of said position.

17. Device according to any one of the preceding claims, **characterised in that** said feeler (8) is mobile both parallel to said rotation axis (R) and transversely to said rotation axis (R).

## Patentansprüche

1. Verfahren zum Konturlesen eines Gegenstands wie dem Rahmen einer Brille **dadurch gekennzeichnet, dass** eine Vorrichtung verwendet wird, umfassend eine Auflage (3, 4) zum Halten des Gegenstands, eine Drehplatte (6) drehbar bezüglich der Auflage (3, 4) um eine Rotationsachse (R) montiert, wobei die Drehplatte (6) eine Abtastuntergruppe (15) trägt, welche einen Taster (8) umfasst, der einen Tastkopf (9) und einen Stab (12) aufweist, der sich senkrecht zum Tastkopf erstreckt, wobei der Tastkopf (9) ein distales Ende aufweist, wobei das Verfahren den Schritt des Versetzens des distalen Endes entlang der Kontur und Erfassen der aufeinanderfolgenden Positionen des distalen Endes umfasst, **dadurch gekennzeichnet, dass** der Schritt des Versetzen während das distale Ende entlang der Kontur versetzt wird, den Schritt des Messens der ausgeübten Kraft zwischen dem Tastkopf (6) und dem Stab (12) umfasst, und gleichzeitig den Schritt des Steuerns der Entfernung zwischen dem Tastkopf (9) und der Drehplatte (6) in Abhängigkeit der Kraft, so dass die Intensität der Kraft unterhalb einer vorgegebenen Schwelle bleibt.

2. Vorrichtung zum Konturlesen (1) eines Gegenstands wie den Rahmen einer Brille (10), unter Umsetzung des Versetzen gemäß Anspruch 1, umfassend eine Auflage (3, 4) zum Halten des Gegenstands, eine Drehplatte (6) drehbar bezüglich der Auflage (3, 4) um eine Rotationsachse (R) montiert, wobei die Drehplatte (6) eine Abtastuntergruppe (15) trägt, welche einen Taster (8) umfasst, der einen Tastkopf (9) und einen Stab (12) aufweist, der sich senkrecht zum Tastkopf erstreckt, wobei der Tastkopf (9) ein distales Ende aufweist, welches dazu ausgelegt ist, sich entlang der Kontur zu bewegen, wobei die Untergruppe (15) darüber hinaus eine Einrichtung (18) an der der Stab (12) befestigt ist umfasst, gegenüberliegend des Tastkopfs erstreckt sich im Wesentlichen quer der Stab (12) ein Antriebsmotor (31) der Einheit (18) um den Abstand zwischen dem Tastkopf (9) und der Drehplatte (6) zu steuern, **dadurch gekennzeichnet, dass** die Untergruppe (15) weiterhin einen Kraftsensor (64) umfasst, welcher auf der Einheit (18) angeordnet ist, um die Kraft zu bestimmen, der sie entlang einer Richtung parallel zum Stab (12) ausgesetzt ist, sowie die Steuermittel, welche mit den Sensor (64) und dem Motor (31) verbunden sind, die den Motors (31) steuern, so dass die Intensität der Kraft niedriger als ein vorbestimmter Schwellenwert während das distale Ende entlang der Kontur versetzt wird, bleibt.

3. Vorrichtung gemäß Anspruch 2 **dadurch gekennzeichnet, dass** die Steuermittel den Motor (31) steuern, so dass die Intensität der Kraft unterhalb einer ersten Schwelle bleibt, wenn die Kraft in einer ersten Richtung wirkt und unterhalb einer zweiten Schwelle bleibt, wenn die Kraft in einer zweiten Richtung, entgegengesetzt zur ersten Richtung, wirkt.

4. Vorrichtung nach einem der Ansprüche 2 oder 3, **dadurch gekennzeichnet, dass** die Einheit (8) eine erste Trägereinheit (18) ist, wobei die Untergruppe (15) zudem eine zweite Trägereinheit (17) umfasst, die transversal von der Drehplatte (6) hervorsteht und an welcher die erste Trägereinheit (18) beweglich in einer Richtung zur Rotationsachse (R) montiert ist.

5. Vorrichtung gemäß Anspruch 4, **dadurch gekennzeichnet, dass** die Drehplatte (6) eine Öffnung (7) umfasst, durch die sich der Stab (12) erstreckt, wobei der Tastkopf (9) sich auf einer ersten Seite der Platte befindet, wohingegen die zweite Trägereinheit (17), die erste Trägereinheit (18) und ein proximales Ende des Stabes (12), gegenüberliegend des Tastkopfes an einer zweiten Seite der Platte (6) befndlich sind.

6. Vorrichtung gemäß einem der Ansprüche 4 oder 5, **dadurch gekennzeichnet, dass** die zweite Trägereinheit eine Trägerwelle (17) aufweist.

7. Vorrichtung gemäß einem der Ansprüche 4 bis 6, **dadurch gekennzeichnet, dass** die erste Trägereinheit ein Trägerarm (18) ist, der ein Plättchen (14) umfasst, welches zwei Ende aufweist, von denen aus sich transversal zwei parallele Fortsätze (41, 42) erstrecken, wobei jeder Fortsatz (41, 42) parallel verformbar entlang der Rotationsachse (R) ist, und eine Muffe (21), die sich zwischen den beiden Enden der Fortsätze gegenüber des Plättchens (40) erstreckt, wobei die Muffe (21) darauf ausgelegt ist, das proximale Ende des Stabes (12) zu umschließen oder einzuspannen.

8. Vorrichtung gemäß Anspruch 7, **dadurch gekennzeichnet, dass** jeder Fortsatz (41, 42) an seinem dem Plättchen (40) gegenüberliegenden Ende eine kreisförmige Öffnung aufweist, die darauf ausgelegt ist, den Stab (12) eingeschlossen in der Muffe (21) aufzunehmen.

9. Vorrichtung gemäß einem der Ansprüche 7 oder 8, **dadurch gekennzeichnet, dass** die zweite Trägereinheit eine Trägerwelle (17) umfasst und der Trägerarm (18) eine Hülse (20) umfasst, die auf der Trägerwelle über eine Kugelhülse (19) zentriert ist, diese erlaubt die Translation der Hülse (20) bezüglich der Trägerwelle (17).

10. Vorrichtung gemäß Anspruch 9, **dadurch gekennzeichnet, dass** der Antriebsmotor (31) ein Ritzel (32) umfasst, welches in eine Zahnung (33), die mit der Hülse (20) verbunden ist, eingreift.

11. Vorrichtung gemäß einem der Ansprüche 4 bis 10, **dadurch gekennzeichnet, dass** der Antriebsmotor (31) einen Geber umfasst, der die Position der ersten Trägereinheit (18) in Bezug auf die zweite Trägereinheit (17) erfasst.

12. Vorrichtung nach einem der Ansprüche 4 bis 11, **dadurch gekennzeichnet, dass** die erste Einheit (18) darüber hinaus drehbar um die zweite Einheit (17) montiert ist.

13. Vorrichtung nach einem der Ansprüche 2 bis 12, **dadurch gekennzeichnet, dass** der Kraftmesser (64) eine Erkennungszelle (47) und eine Fahne (51), die gegenüberliegend montiert sind, umfasst.

14. Vorrichtung nach Anspruch 13, **dadurch gekennzeichnet, dass** die Erkennungszelle (47) eine optoelektronische Zelle ist.

15. Vorrichtung nach einem der Ansprüche 13 oder 14, **dadurch gekennzeichnet, dass** die erste Trägereinheit einen Trägerarm (18) ist, der ein Plättchen (40) umfasst, welches zwei Ende aufweist, von denen aus sich transversal zwei parallele Fortsätze (41, 42) erstrecken, wobei die Erkennungszelle (47) und die Fahne (51) sich zwischen den beiden Fortsätzen (41, 42) befinden.

16. Vorrichtung gemäß Anspruch 15, **dadurch gekennzeichnet, dass** die Erkennungszelle (47) und die Fahne (51) jeweils fest montiert sind am Plättchen (40) und an der Hülse (21), sich ersteckend zwischen zwei Enden der Fortsätze (41, 42), gegenüber dem Plättchen, wobei die Untereinheit (15) eine Signalverarbeitungseinheit (66) umfasst, die mit dem Antriebsmotor (31) verbunden ist, wobei die Zelle (47) Mittel zur Erkennung der Position der Fahne (51) in Bezug auf die Zelle umfasst sowie Signalsendemittel zur Signalverarbeitungseinheit (66) in Abhängigkeit der Positionierung.

17. Vorrichtung nach einem der vorangegangenen Ansprüche, **dadurch gekennzeichnet, dass** der Taster (8) beweglich sowohl parallel zur Rotationsachse (R), als auch quer zur Rotationsachse (R) ist.
